# EUROPEAN PATENT SPECIFICATION

(11) **EP 1 893 888 B1**
(45) Date of publication and mention of the grant of the patent: **23.10.2013**
(21) Application number: 05769388.9
(22) Date of filing: 20.06.2005
(51) Int. Cl.: F01L 1/02, F16F 15/26, F16H 57/00

(54) **DRIVE HAVING A TOOTHED BELT FOR DAMPING TORSIONAL VIBRATIONS**
ANTRIEB MIT EINEM ZAHNRIEMEN ZUM DÄMPFEN VON DREHSCHWINGUNGEN
ENTRAÎNEMENT COMPORTANT UNE COURROIE CRANTÉE AMORTISSANT LES VIBRATIONS TORSIONNELLES

(43) Date of publication of application: 05.03.2008
(73) Proprietor: Dayco Europe S.R.L. Con Unico Socio, 66013 Chieti (IT)
(72) Inventor: TOTO, Giancarlo, I-66013 Chieti (IT); DI MECO, Marco, I-65129 Pescara (IT)
(74) Representative: Bergadano, Mirko
(86) International application number: PCT/IT2005/000355
(87) International publication number: WO 2006/137087

(56) References cited:
- RU-C1- 2 157 317
- US-A- 3 250 653
- US-A- 5 733 399
- US-A1- 2003 130 077

## Description

### TECHNICAL FIELD

The present invention relates to a toothed belt for a synchronous drive that enables damping of the torsional oscillations.

### BACKGROUND ART

A synchronous drive can be used for driving a camshaft of an internal-combustion engine and generally comprises: a toothed drive pulley designed to be rigidly connected to an engine crankshaft; a belt tensioner of the fixed or automatic type; a toothed driven pulley designed to be connected to the camshaft; and a toothed drive belt that meshes on the drive pulley and on the driven pulley.

The camshaft in turn actuates a multiplicity of spring-type distributing valves that load the camshaft and induce an oscillating loading torque that is transmitted to the crankshaft via the synchronous drive.

In particular, the fluctuating torque is periodic and consequently is able to excite the torsional modes of the crankshaft within the operating range of the engine, so causing undesirable vibrations that add to the torsional vibrations of the engine.

The international patent application No. WO-A1-03/046413 illustrates a synchronous drive provided with at least one pulley having a non-circular profile designed to generate onto the camshaft an induced oscillating torque opposite to the fluctuating torque generated by the camshaft.

According to another approach, the document DE-A1-19520508 illustrates a drive for a camshaft comprising a pulley with a non-circular profile similar to what is described above or, alternatively, a toothed belt having an undulated land area profile from which the teeth extend. In particular, the cords embedded in the body of the toothed belt surface and are partially interrupted in positions corresponding to the concavities of the undulated land area profile, thus obtaining a belt having a longitudinally varying stiffness designed to generate an additional load on the drive to shift the frequency of resonance into an operating range that does not cause discomfort or annoyance.

The toothed belt described proves, however, weakened and of low reliability, a fact that is not acceptable for a critical component of the engine. Furthermore, US-A-20030130077 discloses a toothed belt having grooves defined on the back to enhance bolt flexibility.

### DISCLOSURE OF INVENTION

The aim of the present invention is to provide a synchronous drive which will be free from the drawbacks referred to above.

The aim of the present invention is achieved by a drive as defined in Claim 1.

### BRIEF DESCRIPTION OF THE DRAWINGS

For a better understanding of the present invention a preferred embodiment thereof is now described, purely by way of non-limiting example, with reference to the attached plate of drawings, wherein:
- Figure 1 is a front view of an internal-combustion engine having a synchronous belt drive comprising a toothed belt according to the present invention;
- Figure 2 is a perspective view, not in scale, of an enlarged detail of the drive of Figure 1, in which the arrow indicates a direction of movement of the belt;
- Figure 3 is a diagram of a loading torque and of an induced torque that load a camshaft of the internal-combustion engine connected to the synchronous drive, as a function of the angle of rotation of the crankshaft;

- Figure 4 is a graph representing the amplitude of the angular oscillations of the drive as the angular velocity of the engine shaft varies, in which the values obtained with a traditional belt (dashed line) are compared with the ones obtained with a belt according to the present invention (solid line); and
- Figure 5 is a schematic perspective view of equipment for producing a belt according to the present invention.

### BEST MODE FOR CARRYING OUT THE INVENTION

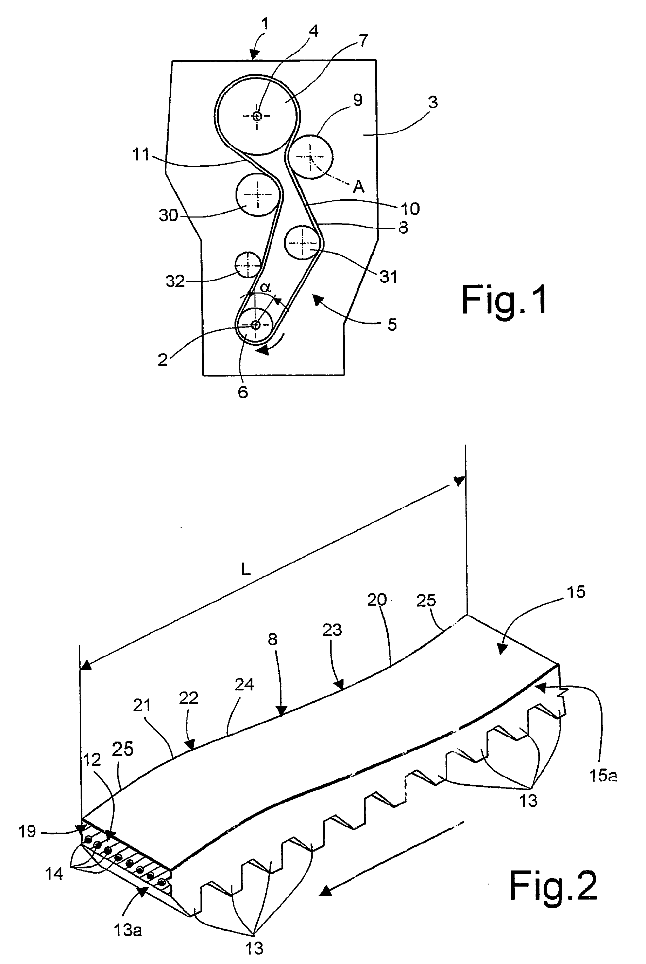

Figure 1 represents a four-stroke four-cylinder diesel engine 1 having a crankshaft 2 rotatable in a clockwise direction and coming out from a wall 3 of the engine 1, and a camshaft 4, which is parallel to the crankshaft 2 and is designed to control a multiplicity of spring-type timing valves (not illustrated); in particular, each cylinder has an intake valve and an exhaust valve;

The camshaft 4 actuates a plurality of pump injectors (not shown) and is connected to the crankshaft 2 via a synchronous drive 5 comprising: a circular drive pulley 6, rigidly connected to the crankshaft 2; a circular driven pulley 7, rigidly connected to the camshaft 4; and a toothed belt 8 run over the drive pulley 6 and the driven pulley 7.

The synchronous drive 5 further comprises a transmission element 9, preferably an idle pulley, which rotates about a fixed axis A and is set on the rear wall 3, and preferably an automatic tensioner 30.

In particular, the synchronous drive 5 has a tensioned branch 10 of the toothed belt 8 co-operating with the idle pulley 9 and defined between the driven pulley 7 and the drive pulley 6, and a slack branch 11 co-operating with the tensioner 30 and defined between the drive pulley 6 and the driven pulley 7.

Furthermore, the drive comprises an actuating pulley 31, over which the toothed belt 8 is wound along the tensioned branch 10 and which is designed to actuate a water pump, and a idle pulley 32 having a reduced winding angle and designed to reduce the flexural oscillations of the slack branch 11.

The toothed belt 8 comprises a body 12 made of elastomeric material, from an internal surface of which there extends a multiplicity of teeth 13, which are spaced at equal distances apart from one another and are coated with a wear-resistant surface layer 13a to co-operate with the drive pulley 6 and the driven pulley 7. The toothed belt 8 further comprises a multiplicity of filiform longitudinal reinforcement elements 14, or cords, which are embedded within the body 12 and are made of a substantially inextensible material, for example glass fibre, carbon fibre or both, which ensures a substantially uniform modulus of elasticity in the longitudinal direction.

The body 12 further comprises, on the opposite side with respect to the teeth 13, a back 15a delimited by a surface 15 with an undulated profile in the longitudinal direction, said undulations having a period L, which is coated with a wear-resistant surface layer 19. The undulated profile is defined by a succession of recesses 20 and reliefs 21 having respective top portions 22 and bottom portions 23 radiused to one another via a succession of ascending sides 24 and descending sides 25, with reference to the direction indicated in Figure 2.

The surface 15 co-operates with the idle pulley 9 to impose periodic oscillations of the tension of the tensioned branch 10 with respect to the tension of the slack branch 11; in particular, the tension of the tensioned branch 10 varies between a maximum when the belt comes into contact with the idle pulley in a position corresponding to a relief 21 and a minimum when the belt comes into contact with the idle pulley in a position corresponding to a recess 20. The variation in tension on the tensioned branch 10 generates on the synchronous drive 5 an induced torque, which tends to accelerate the camshaft 4 when the tension on the tensioned branch 10 increases, and tends to slow down the camshaft 4 when the tension on the tensioned branch 10 decreases, considering a positive torque directed in the clockwise direction.

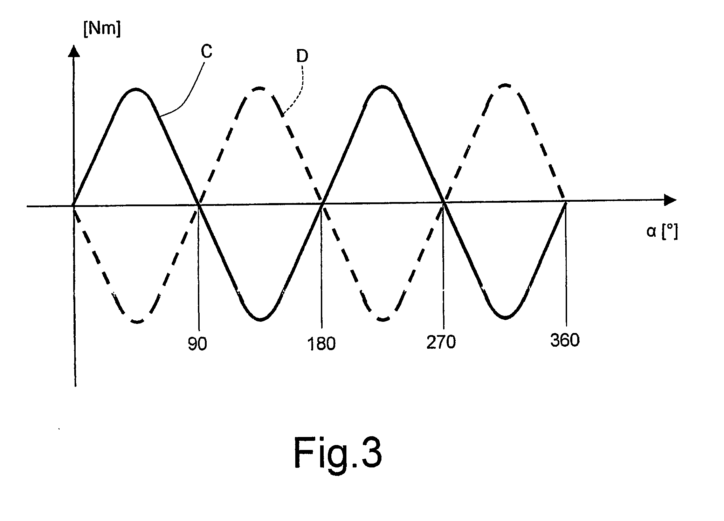

Figure 3 represents with a solid line the graph of the loading torque, designated by C, acting on the camshaft 4 as a function of the angle of rotation 'α' of the crankshaft 2. By appropriately designing the undulated profile of the surface 15, it is possible to obtain an induced torque, designated by D in Figure 3 and represented by a dashed line, equal and in phase opposition with respect to the loading torque.

In particular, with reference to Figure 3, for 'α' ranging between 0° and 90° and between 180° and 270°, the loading torque C is positive and tends to accelerate the driven pulley 7. The toothed belt 8 of the synchronous drive 5 is mounted in such a way that the reliefs 21 will co-operate with the idle pulley 9 generating a deceleration of the camshaft 4 when the loading torque C is positive and tends to cause acceleration. Furthermore, the recesses 20 are set at a distance from the reliefs 21 so as to co-operate with the idle pulley 9 generating an acceleration of the camshaft 4 when the loading torque C is negative and tends to cause deceleration.

A phase opposition is consequently obtained, which is maintained for each complete revolution of the toothed belt 8 in so far as the period L of the surface 15 is sized to have a value equal to half the length of the primitive circumference of the drive pulley 6, and the length of the toothed belt 8 is an integer multiple of half the length of the primitive circumference of the drive pulley 6.

The toothed belt 8 can be made directly by vulcanization with radial pressure using a traditional vulcanizing machine comprising a circular pressure chamber having a cavity and a cylindrical spindle designed to be inserted into the cavity. In particular, the reinforcement elements 14 and a sleeve made of elastomeric material to be vulcanized are wrapped round the spindle; next, strips of elastomeric material parallel to the axis of the spindle are arranged along the sleeve circumferentially spaced at equal distances apart; finally, the wear-resistant layer 19 is wrapped round the spindle.

In this way, when the spindle is inserted into the cavity for vulcanization and the pressure chamber expands radially compressing the spindle in a condition of high temperature, the strips are modelled radiusing to the sleeve, and undergo cross-linking with the sleeve itself to define the succession of recesses 20 and reliefs 21.

Operation of the synchronous drive 5 is described in what follows.

The camshaft 4 is subjected to the periodic loading torque C, which is transmitted to the synchronous drive 5 and to the toothed belt 8. However, the toothed belt 8 generates, co-operating with the idle pulley 9, the induced torque D, which has the same frequency as, and is in phase opposition with respect to, the loading torque C. By appropriately designing the height of the reliefs 21 and recesses 20 according to the longitudinal stiffness of the toothed belt 8, it is moreover possible to obtain a magnitude of the induced torque D so that the induced torque D will be equal and opposite to the loading torque C, which is consequently cancelled out and cannot be transmitted to the crankshaft 2. In this way, a forcing torque for the torsional oscillations of the crankshaft 2 is eliminated, and the dynamic stresses decrease.

The variation of tension is differential between the slack branch 11 and the tensioned branch 10 so as to be able to generate a resultant having an arm with respect to the camshaft 4.

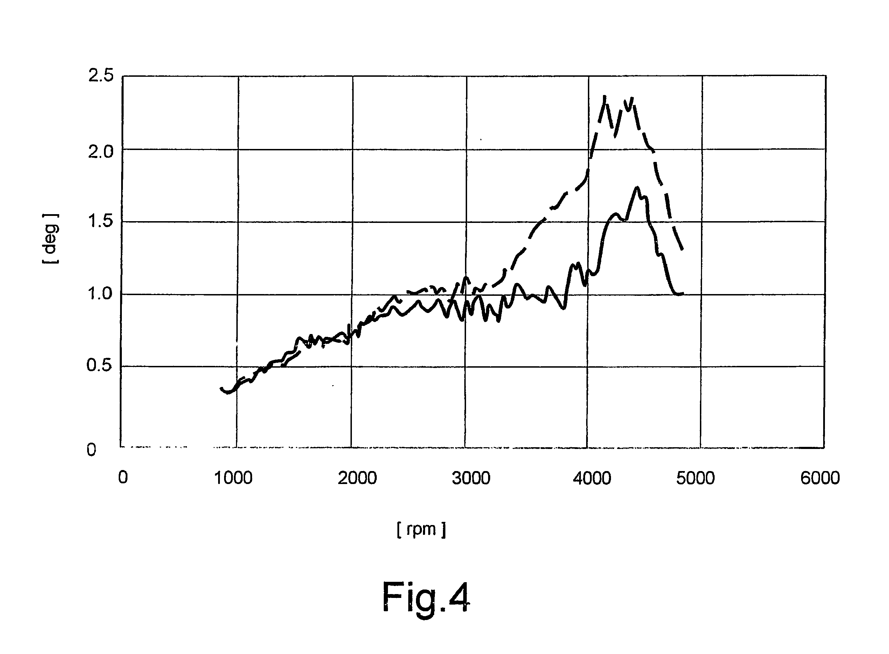

Figure 4 illustrates the results of a test conducted on an engine block driven electrically and having a drive like the one that has been described previously, on which there have been mounted in succession a traditional smooth-backed belt and a belt according to the present invention.

In particular, illustrated in the figure is the variation in the mean value of the difference of angular position, i.e., of the phase difference, between the pulley of the engine shaft and the pulley of the camshaft as the angular velocity of the engine varies. The dashed line represents the results for a drive with a traditional belt, and the solid line represents the findings for a drive with a belt according to the present invention.

As may be noted, starting from a value of the engine rate of 3000 r.p.m., the belt according to the present invention enables a considerable reduction in the amplitude of the vibrations.

The advantages of the present synchronous drive are described in what follows.

The toothed belt 8 provided with the reliefs 21 and recesses 20 enables both attenuation of the torsional vibrations of the engine and use of traditional circular pulleys. In addition, it is possible to produce the toothed belt 8 using the equipment generally employed for the production of traditional belts, and consequently no additional excessive tooling costs are involved.

Finally, it is clear that modifications and variations may be made to the toothed belt 8 described and illustrated herein, without thereby departing from the sphere of protection of the present invention, as defined in the annexed claims.

In particular, the idle pulley 9 can be arranged to co-operate with the slack branch 11 of the synchronous drive 5.

Furthermore, the toothed belt 8 may be without the wear-resistant fabric 19. In this case, the toothed belt 8 can be produced using the method described previously or else using a material removal machine comprising a pair of toothed dragging pulleys for driving the belt and a mobile cutting element co-operating with the belt in a position corresponding to one of the two pulleys. After being vulcanized with a cylindrical surface 15, for example by means of a pressure chamber, as described previously, the belt 8 is arranged on the dragging pulleys and is set in rotation, whilst the cutter moves with reciprocating motion in a rectilinear direction to produce the recesses 20 and reliefs 21 of the surface 15.

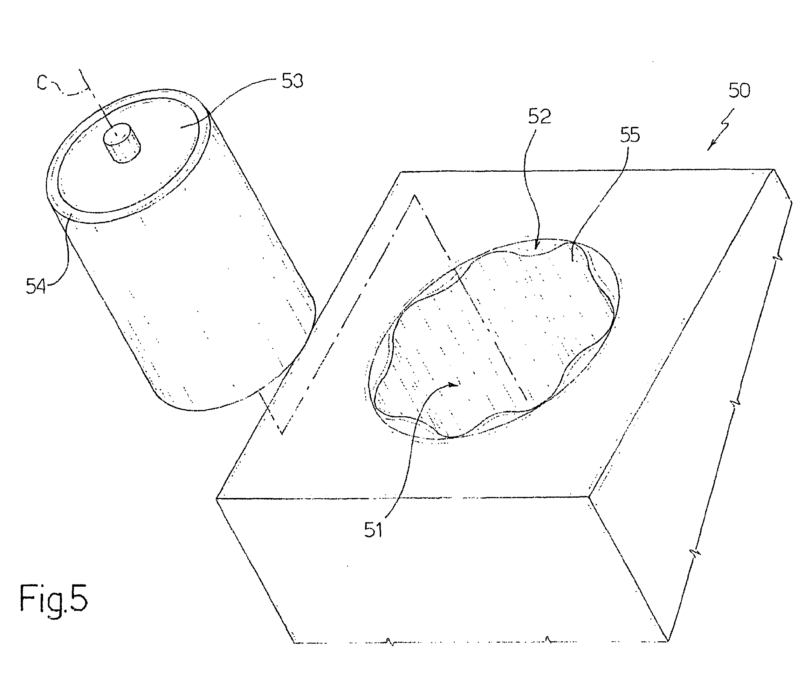

Alternatively, the toothed belt 8 can be produced, even when it is provided with the wear-resistant fabric 19, using vulcanizing equipment 50 (Figure 5) comprising a pressure chamber 52 defining a cavity 51 having a vertical axis C. In this case, it is sufficient to wind, around a cylindrical spindle 53, a sleeve of elastomeric material 54 similar to the sleeve described previously, and the undulated surface 15 is shaped when the pressure chamber is inflated; namely, the pressure chamber 52 has an inflatable wall 55 arranged within the cavity 51 and radially shaped so as to reproduce the negative of a series of recesses and reliefs, which have the period L and correspond, respectively, to the recesses 20 and to the reliefs 21.

In the belt according to the present invention, the amplitude between a minimum point of the recess 20 and a maximum point of the relief 21 has a value of 1.5 mm.

However, said value depends upon the individual application, and it is consequently possible to envisage a range of variation comprised between 0.01 mm and 5 mm, preferably between 1 mm and 2 mm.

In addition, the engine can be provided even with more than two valves per cylinder, but operation of the toothed belt 8 remains substantially unvaried.

## Claims

1. A synchronous drive (5) for an internal-combustion engine (1), comprising a toothed drive pulley (6), at least one toothed driven pulley (7) designed to be connected to a camshaft (4) subjected to a periodic loading torque (c), a transmission element (9) and a toothed belt (8) meshing with said drive pulley (6) and with said driven pulley (7) to define a tensioned branch (10) and a slack branch (11) of said drive, said toothed belt (8) comprising: a body (12) made of elastomeric material having on its periphery a back (15a) designed to co-operate with said transmission element (9) ; a plurality of teeth (13) spaced at equal distances apart and extending in relief with respect to said body (12) on the opposite side with respect to said back (15a) ; and a plurality of filiform reinforcement elements (14) embedded in said body (12), said drive being **characterized in that** said back (15a) is delimited by an undulated surface (15) and **in that** said transmission element (9) co-operates with said undulated surface (15) so that the tension of said tensioned branch (10) varies between a maximum when a relief (21) of said undulated surface (15) contacts said transmission element (9) and a minimum when a recess (20) of said undulated surface (15) contacts said transmission element (9) in a periodic way to generate a torque.

2. The drive of claim 1, **characterized in that** the undulated surface (15) defines a periodic succession of recesses (20) and reliefs (21) having a period (L).

3. The drive of claim 2, **characterized in that** said period (L) is equal to half the length of a primitive circumference of said drive pulley (6) and **in that** the length of said toothed belt (8) is equal to an integer multiple of half the length of said drive pulley (6).

4. The drive of either claim 2 or 3, **characterized in that** a maximum amplitude of said undulated surface (15) between a point of minimum of one of said recesses (20) and a point of maximum of one of said reliefs (21) is between 0.001 mm and 5 mm.

5. The drive of claim 4, **characterized in that** said amplitude is between 1 mm and 2 mm.

6. The drive according to any of the preceding claims, **characterized in that** said transmission element (9) is fixed.

7. The drive of claim 6, **characterized in that** said transmission element (9) comprises an idle pulley.

8. The drive according to any of the preceding claims **characterized in that** it comprises an automatic tensioner (30) for tensioning said slack branch (11).

## Patentansprüche

1. Synchronantrieb (5) für einen Verbrennungsmotor (1), umfassend eine gezähnte Antriebsscheibe (6), wenigstens eine gezähnte angetriebene Scheibe (7), die ausgestaltet ist, mit einer Nockenwelle (4) verbunden zu werden, die einem periodischem Lastdrehmoment (c) ausgesetzt ist, ein Übertragungselement (9) und einen Zahnriemen (8), der mit der Antriebsscheibe (6) und der angetriebenen Scheibe (7) im Eingriff steht, um einen zugbeanspruchten Abschnitt (10) und einen losen Abschnitt (11) des Antriebs festzulegen, wobei der Zahnriemen (8) umfasst: einen Körper (12) hergestellt aus Elastomermaterial, der an seinem Umfang eine Rückseite (15a) aufweist, die ausgestaltet ist, mit dem Übertragungselement (9) zusammenzuwirken; eine Mehrzahl von Zähnen (13), die äquidistant zueinander angeordnet sind und sich als Erhöhung bezogen auf den Körper (12) auf der gegenüberliegenden Seite bezogen auf die Rückseite (15a) erstrecken; und eine Mehrzahl von fadenförmigen Verstärkungselementen (14), die in den Körper (12) eingebettet sind, wobei der Antrieb **dadurch gekennzeichnet ist, dass** die Rückseite (15a) begrenzt wird durch eine gewellte Oberfläche (15) und dass das Übertragungselement (9) mit der gewellten Oberfläche (15) zusammenwirkt, so dass der Zug des zugbeanspruchten Abschnitts (10) auf periodische Weise zwischen einem Maximum, wenn eine Erhöhung (21) der gewellten Oberfläche (15) das Übertragungselement (9) berührt, und einem Minimum, wenn eine Vertiefung (20) der gewellten Oberfläche (15) das Übertragungselement (9) berührt, schwankt, um ein Drehmoment zu erzeugen.

2. Antrieb nach Anspruch 1, **dadurch gekennzeichnet, dass** die gewellte Oberfläche (15) eine periodische Abfolge von Vertiefungen (20) und Erhöhungen (21) mit einer Periode (L) festlegt.

3. Antrieb nach Anspruch 2, **dadurch gekennzeichnet, dass** die Periode (L) gleich der halben Länge eines Grundumfangs der Antriebsscheibe (6) ist und dass die Länge des Zahnriemens (8) gleich einem ganzzahligen Vielfachen der halben Länge dieser Antriebsscheibe (6) ist.

4. Antrieb nach entweder Anspruch 2 oder 3, **dadurch gekennzeichnet, dass** eine maximale Amplitude der gewellten Oberfläche (15) zwischen einem Minimalpunkt einer der Vertiefungen (20) und einem Maximalpunkt einer der Erhöhungen (21) zwischen 0.001mm und 5mm beträgt.

5. Antrieb nach Anspruch 4, **dadurch gekennzeichnet, dass** die Amplitude zwischen 1mm und 2mm beträgt.

6. Antrieb nach irgendeinem der vorhergehenden Ansprüche, **dadurch gekennzeichnet, dass** das Übertragungselement (9) fest ist.

7. Antrieb nach Anspruch 6, **dadurch gekennzeichnet, dass** das Übertragungselement (9) eine Leerlaufscheibe umfasst.

8. Antrieb nach irgendeinem der vorhergehenden Ansprüche, **dadurch gekennzeichnet, dass** er einen automatischen Spanner (30) zum Spannen des losen Abschnitts (11) umfasst.

## Revendications

1. Entraînement synchrone (5) pour un moteur à combustion interne (1), comportant une poulie d'entraînement dentée (6), au moins une poulie dentée entraînée (7) destinée à être couplée à un arbre à cames (4) soumis à un couple moteur périodique (c), un élément de transmission (9) et une courroie crantée (8) montée sur ladite poulie d'entraînement dentée (6) et ladite poulie dentée entraînée (7) pour définir une branche sous tension (10) et une branche détendue (11) dudit entraînement, ladite courroie crantée (8) comprenant : un corps (12) réalisé en un matériau élastomère ayant à sa périphérie une partie dorsale (15a) destinée à coopérer avec ledit élément de transmission (9) ; une pluralité de dents (13) équidistantes et s'étendant en relief par rapport audit corps (12) du côté opposé par rapport à ladite partie dorsale (15a) ; et une pluralité d'éléments de renfort filiformes (14) noyés dans ledit corps (12), ledit entraînement étant **caractérisé en ce que** ladite partie dorsale (15a) est délimitée par une surface ondulée (15) et que l'élément de transmission (9) coopère avec ladite surface ondulée (15) de sorte que la tension de la branche sous tension (10) varie entre un minimum lorsqu'un relief (21) de ladite surface ondulée (15) est en contact avec l'élément de transmission (9) et un minimum lorsqu'un creux (20) de ladite surface ondulée (15) est en contact avec l'élément de transmission (9), de façon périodique pour générer un couple.

2. Entraînement selon la revendication 1, **caractérisé en ce que** la surface ondulée (15) définit une succession périodique de creux (20) et de reliefs (21) selon une période (L).

3. Entraînement selon la revendication 2, **caractérisé en ce que** ladite période (L) est égale à la moitié de la longueur de la circonférence initiale de la poulie d'entraînement (6) et **en ce que** la longueur de la courroie crantée (8) est égale à un multiple entier de la demi-longueur de ladite poulie d'entraînement (6).

4. Entraînement selon l'une quelconque des revendications 2 ou 3, **caractérisé en ce que** l'amplitude maximale de ladite surface ondulée (15) entre un point de minimum de l'un desdits creux (20) et un point de maximum de l'un desdits reliefs (21) est comprise entre 0,001 mm et 5mm.

5. Entraînement selon la revendication 4, **caractérisé en ce que** ladite amplitude est comprise entre 1 mm et 2mm.

6. Entraînement selon l'une quelconque des revendications précédentes, **caractérisé en ce que** ledit élément de transmission (9) est fixé.

7. Entraînement selon la revendication 6, **caractérisé en ce que** ledit élément de transmission (9) comporte une poulie libre.

8. Entraînement selon l'une quelconque des revendications précédentes, **caractérisé en ce qu'**il comporte un tendeur automatique (30) pour mettre ladite branche détendue (11) en tension.
